# EUROPÄISCHE PATENTSCHRIFT

(11) **EP 3 224 847 B1**
(45) Veröffentlichungstag und Bekanntmachung des Hinweises auf die Patenterteilung: **12.12.2018**
(21) Anmeldenummer: 15825607.3
(22) Anmeldetag: 29.12.2015
(51) Int. Cl.: H01H 3/36, H01H 33/666

(54) **KOPPLUNGSGLIED FÜR EIN ELEKTRISCHES SCHALTGERÄT, INSBESONDERE EINE VAKUUMSCHALTRÖHRE**
COUPLING ELEMENT FOR AN ELECTRIC SWITCHING DEVICE, IN PARTICULAR A VACUUM SWITCHING TUBE
ÉLÉMENT DE COUPLAGE POUR COMMUTATEUR ÉLECTRIQUE, EN PARTICULIER TUBE COMMUTATEUR À VIDE

(30) Priorität: 08.01.2015 DE 102015200135
(43) Veröffentlichungstag der Anmeldung: 04.10.2017
(73) Patentinhaber: Siemens Aktiengesellschaft, 80333 München (DE)
(72) Erfinder: BACHMAIER, Georg, 80469 München (DE); GÖDECKE, Andreas, 81829 München (DE); VONTZ, Thomas, 81539 München (DE); ZÖLS, Wolfgang, 81249 München-Lochhausen (DE)
(86) Internationale Anmeldenummer: PCT/EP2015/081332
(87) Internationale Veröffentlichungsnummer: WO 2016/110430

(56) Entgegenhaltungen:
- EP-A1- 2 312 606
- DE-A1- 10 238 950

## Beschreibung

Die Erfindung betrifft ein Kopplungsglied für ein elektrisches Schaltgerät, insbesondere eine Vakuumschaltröhre.

Elektrische Schaltgeräte werden im Niederspannungs-, Mittelspannungs- und Hochspannungsbereich zum Öffnen und Schließen von elektrischen Schaltkontakten eingesetzt. Häufig kommen hierbei Vakuumschaltröhren zum Einsatz, bei denen die elektrischen Schaltkontakte in einem Vakuum angeordnet sind, wodurch eine hohe Spannungsfestigkeit erreicht wird. Es ist wünschenswert, elektrische Schaltgeräte einfach und kompakt aufzubauen. Diesem Ziel steht allerdings die komplexe Kinematik zur Bewegung der Schaltkontakte in elektrischen Schaltgeräten entgegen.

Aus dem Stand der Technik sind verschiedene Varianten bekannt, wie Schaltkontakte in elektrischen Schaltanlagen und insbesondere in Vakuumschaltröhren betätigt werden können. Beispielsweise ist in EP2312606B1 der Einsatz eines magnetischen Antriebs in demselben Gehäuse wie die Röhre beschrieben. Während ältere Systeme (z.B. das ABB System VM1) oft eine Hebelübersetzung zwischen Antrieb und Vakuumschaltröhre aufweisen, schlagen neuere Arbeiten, wie z.B. CN201788887U oder CN202159623U, einen Direktantrieb vor, d.h. eine direkte, und damit kompakte, Verbindung zwischen Aktor und Vakuumschaltröhre.

Eine ähnliche Anordnung ist in den sogenannten "Reclosern" gegeben, wo die Vakuumschaltröhre ebenfalls über einen Direktantrieb mittels Magnetantrieb angetrieben wird (siehe z.B. EP0580285A2 oder auch CN2350863Y).

Schließlich ist in DE10238950B4 eine Anordnung beschrieben, die Vakuumschaltröhre und Antrieb soweit zusammenführt, dass letzterer nicht im Vakuumbereich der Schaltröhre untergebracht ist. Weiterhin ist dort beschrieben, dass der Antrieb auf dem elektrischen Potential der Mittelspannung gehalten wird, wodurch auf eine elektrische Isolation zwischen Antrieb und Schaltröhre verzichtet werden kann.

Aufgabe der Erfindung ist es, ein Kopplungsglied für ein elektrisches Schaltgerät zu schaffen, mit dem einfach und flexibel eine rotatorische Bewegung des Antriebs des Schaltgeräts in eine Linearbewegung der Schaltkontakte gewandelt werden kann.

Diese Aufgabe wird mit dem Kopplungsglied mit den in Anspruch 1 angegebenen Merkmalen gelöst. Bevorzugte Weiterbildungen der Erfindung sind in den zugehörigen abhängigen Ansprüchen, der nachfolgenden Beschreibung und den Zeichnungen angegeben.

Das erfindungsgemäße Kopplungsglied ist für ein elektrisches Schaltgerät vorgesehen, bei dem es sich in einer bevorzugten Variante um eine Vakuumschaltröhre handelt. Nichtsdestotrotz kann das Kopplungsglied auch in anderen elektrischen Schaltgeräten im Niederspannungs-, Mittelspannungs- oder Hochspannungsbereich eingesetzt werden. Das Kopplungsglied umfasst einen ersten Schaltkontakt zum Öffnen und Schließen eines elektrischen Kontakts mit einem zweiten Schaltkontakt.

In dem erfindungsgemäßen Kopplungsglied ist ein länglicher Wickelkörper mit zwei in Längsrichtung seiner Längsachse entgegengesetzten Enden vorgesehen, wobei an einem Ende der erste Schaltkontakt angeordnet ist. Ferner umfasst das Kopplungsglied einen Rotationskörper, durch den sich der Wickelkörper erstreckt und der zur Kopplung mit einem Antrieb vorgesehen ist, um mittels des Antriebs eine Rotationsbewegung auszuführen. Der Rotationskörper umfasst zwei Seiten, von denen eine dem einen Ende des Wickelkörpers und die andere dem anderen Ende des Wickelkörpers zugewandt ist. Der Rotationskörper ist drehbar auf dem Wickelkörper gelagert und der Wickelkörper ist linear geführt, so dass er um seine Längsachse nicht drehbar ist, jedoch in seiner Längsrichtung relativ zu dem Rotationskörper verschoben werden kann.

In dem erfindungsgemäßen Wickelkörper sind auf einer oder beiden Seiten des Rotationskörpers jeweils eine Anzahl von flexiblen Drähten (d.h. zumindest ein Draht) und insbesondere eine Mehrzahl von Drähten derart zwischen dem Rotationskörper und dem Wickelkörper angeordnet bzw. gespannt, dass über entgegengesetzte Rotationsbewegungen des Rotationskörpers ein Aufwickeln und Abwickeln des oder der Drähte auf dem Wickelkörper bewirkt wird und hierdurch der Wickelkörper in seiner Längsrichtung relativ zum Rotationskörper zum Öffnen und Schließen des elektrischen Kontakts des ersten Schaltkontakts mit dem zweiten Schaltkontakt bewegt wird.

Das erfindungsgemäße Kopplungsglied setzt auf einfache und effiziente Weise die durch einen Antrieb verursachte Rotationsbewegung in Öffnungs- bzw. Schließbewegungen von Schaltkontakten um. Über geeignete Formgestaltung des Wickelkörpers, auf dem sich die Drähte auf- bzw. abwickeln, kann flexibel die Kinematik der Bewegung des ersten Schaltkontakts an die gewünschten Gegebenheiten angepasst werden.

In einer bevorzugten Variante ist der Rotationskörper ein scheibenförmiger Körper, dessen beiden Seiten kreisförmig sind, wobei sich der Wickelkörper vorzugsweise durch die Mitte des scheibenförmigen Körpers erstreckt. Hierdurch wird ein kompakter Aufbau des Kopplungsglieds erreicht. Der scheibenförmige Körper umfasst in einer Ausführungsform der Erfindung eine einzelne Scheibe, kann jedoch ggf. auch mehrere Scheiben beinhalten, die in Längsrichtung des Wickelkörpers nebeneinander und ggf. beabstandet voneinander angeordnet sind.

In einer weiteren, besonders bevorzugten Variante des erfindungsgemäßen Kopplungsglieds sind für eine oder beide Seiten des Rotationskörpers der oder die Drähte, die auf einer jeweiligen Seite angeordnet sind, jeweils mit einem Ende am Rotationskörper und insbesondere am Rand des Rotationskörpers und mit dem anderen Ende am Wickelkörper befestigt, wobei die Befestigung am Wickelkörper vorzugsweise am Ende des Wickelkörpers vorgesehen ist, dem die jeweilige Seite des Rotationskörpers zugewandt ist. Gemäß dieser Variante wird eine effiziente Wandlung der Rotationsbewegung des Rotationskörpers in die Linearbewegung des Wickelkörpers erreicht. Der Begriff der jeweiligen Seite umfasst hier und im Folgenden auch nur eine einzelne Seite, falls die Anzahl von Drähten nur auf einer Seite vorgesehen ist.

In einer weiteren Ausgestaltung des erfindungsgemäßen Kopplungsglieds sind für eine oder beiden Seiten des Rotationskörpers die Drähte, die auf einer jeweiligen Seite angeordnet sind, in Draufsicht auf die jeweilige Seite des Rotationskörpers symmetrisch um den Wickelkörper positioniert. Hierdurch wird eine gleichmäßige Umsetzung der Rotationsbewegung in die Hebebewegung erreicht. Symmetrisch bedeutet, dass der Winkel zwischen benachbarten Drähten in Draufsicht auf die jeweilige Seite gleich groß ist.

In einer weiteren Variante umfassen für eine oder beide Seiten des Rotationskörpers die Drähte, die auf einer jeweiligen Seite angeordnet sind, ein oder mehrere Paare von Drähten, wobei die Drähte eines jeweiligen Paars in Draufsicht auf die jeweilige Seite des Rotationskörpers um 180° um die Längsachse des Wickelkörpers versetzt sind. Hierdurch wird ein einfacher Aufbau des Kopplungsglieds erreicht.

In einer weiteren, besonders bevorzugten Ausführungsform sind auf beiden Seiten des Rotationskörpers die Drähte derart angeordnet, dass bei einer Rotationsbewegung des Rotationskörpers in die eine Richtung die Drähte auf der einen Seite aufgewickelt und auf der anderen Seite abgewickelt werden und dass bei einer Rotationsbewegung des Rotationskörpers in die andere Richtung die Drähte auf der einen Seite abgewickelt und auf der anderen Seite aufgewickelt werden. Hierdurch wird auf einfache Weise eine Kinematik sowohl zum Öffnen als auch zum Schließen der Schaltkontakte erreicht.

Der Wickelkörper kann je nach Anforderungen an das Kopplungsglied unterschiedlich ausgestaltet sein. In der Regel weist der Wickelkörper einen kreisförmigen Querschnitt auf. Der Wickelkörper kann z.B. ein zylindrischer Stab mit konstantem kreisförmigem Querschnitt sein, wodurch eine konstante Geschwindigkeit der Bewegung des ersten Schaltkontakts erreicht wird. Nichtsdestotrotz muss der Durchmesser des kreisförmigen Querschnitts entlang der Längsrichtung des Wickelkörpers nicht konstant sein.

Um die Kinematik der Bewegung des ersten Schaltkontakts zu variieren, ist der Wickelkörper in einer weiteren Variante der Erfindung auf einer oder beiden Seiten des Rotationskörpers jeweils derart geformt, dass seine Dicke und insbesondere der Durchmesser seines ggf. kreisförmigen Querschnitts entlang seiner Längsrichtung (zumindest abschnittsweise) variiert und insbesondere kontinuierlich zu- oder abnimmt.

In einer Ausgestaltung der soeben beschriebenen Ausführungsform nimmt die Dicke des Wickelkörpers auf der Seite des Rotationskörpers, welche dem Ende des Wickelkörpers mit dem daran angeordneten ersten Schaltkontakt zugewandt ist, in Längsrichtung des Wickelkörpers hin zu diesem Ende zu. Hierdurch wird ein progressiver Übersetzungsverlauf erreicht, bei dem sich der erste Schaltkontakt bei geringerem Abstand zum zweiten Schaltkontakt schneller bewegt, so dass der elektrische Kontakt schneller geöffnet und geschlossen wird. Mit dieser Variante können elektrische Überschläge zwischen erstem und zweitem Schaltkontakt vermieden werden. Vorzugsweise nimmt in dieser Variante die Dicke des Wickelkörpers auf der anderen Seite des Rotationskörpers in Längsrichtung des Wickelkörpers hin zu dem anderen Ende des Wickelkörpers ab. Insbesondere entspricht die Form des Wickelkörpers auf der einen Seite der Form des Wickelkörpers auf der anderen Seite. Es wird hierdurch ein gleichmäßiges Auf- und Abwickeln der Drähte auf beiden Seiten des Rotationskörpers und somit ein Erschlaffen der Drähte vermieden.

In einer anderen Variante nimmt die Dicke des Wickelkörpers auf der Seite des Rotationskörpers, welche dem Ende des Wickelkörpers mit dem daran angeordneten ersten Schaltkontakt zugewandt ist, in Längsrichtung des Wickelkörpers hin zu diesem Ende ab. Hierdurch wird ein degressiver Übersetzungsverlauf erreicht, bei dem bei geringerem Abstand zwischen erstem Schaltkontakt und zweitem Schaltkontakt die Bewegung des ersten Schaltkontakts verlangsamt wird. In dieser Ausführungsform ist vorzugsweise die Dicke des Wickelkörpers auf der anderen Seite des Rotationskörpers in Längsrichtung des Wickelkörpers hin zu dem anderen Ende des Wickelkörpers zunehmend. Insbesondere entspricht die Form des Wickelkörpers auf der einen Seite der Form des Wickelkörpers auf der anderen Seite. Auch hierdurch wird ein gleichmäßiges Aufwickeln und Abwickeln der Drähte auf beiden Seiten erreicht und damit einem Erschlaffen der Drähte entgegengewirkt.

In einer Ausführungsform des erfindungsgemäßen Kopplungsglieds ist der erste Schaltkontakt an dem einen Ende des Wickelkörpers direkt mit dem Wickelkörper verbunden. Nichtsdestotrotz kann die Verbindung auch indirekt über ein dazwischen liegendes elastisches Element erfolgen, wodurch kinetische Energie bei Kontaktschluss gespeichert wird.

In einer weiteren Variante des erfindungsgemäßen Kopplungsglieds enthält zumindest ein Teil der Drähte auf einer Seite oder auf beiden Seiten des Rotationskörpers elastische Elemente. Ebenso können die entsprechenden Drähte ggf. elastisch ausgestaltet sein. Mit dieser Variante wird eine Vorspannung der Drähte erzielt und somit Unterschieden in den Aufwickelgeschwindigkeiten auf gegenüberliegenden Seiten des Wickelkörpers entgegengewirkt.

Neben dem erfindungsgemäßen Kopplungsglied betrifft die Erfindung ein elektrisches Schaltgerät, insbesondere eine Vakuumschaltröhre, in dem ein elektrischer Kontakt eines ersten Schaltkontakts mit einem zweiten Schaltkontakt geöffnet und geschlossen werden kann, wobei das Schaltgerät ein erfindungsgemäßes Kopplungsglied bzw. eine oder mehrere bevorzugte Varianten des erfindungsgemäßen Kopplungsglieds zum Öffnen und Schließen des elektrischen Kontakts umfasst.

Ausführungsbeispiele der Erfindung werden nachfolgend anhand der beigefügten Figuren detailliert beschrieben.

Es zeigen:
- Fig. 1 bis Fig. 3: schematische Darstellungen einer Ausführungsform eines erfindungsgemäßen Kopplungsglied zu verschiedenen Zeitpunkten seiner Bewegung; und
- Fig. 4 bis Fig. 7: unterschiedliche Varianten eines erfindungsgemäßen Kopplungsglieds.

Nachfolgend wird die Erfindung anhand eines Kopplungsglieds erläutert, das dazu dient, die Schaltkontakte in einer Vakuumschaltröhre zu öffnen und zu schließen. Nichtsdestotrotz kann das erfindungsgemäße Kopplungsglied auch in anderen Schaltgeräten zum Öffnen und Schließen eines elektrischen Kontakts eingesetzt werden.

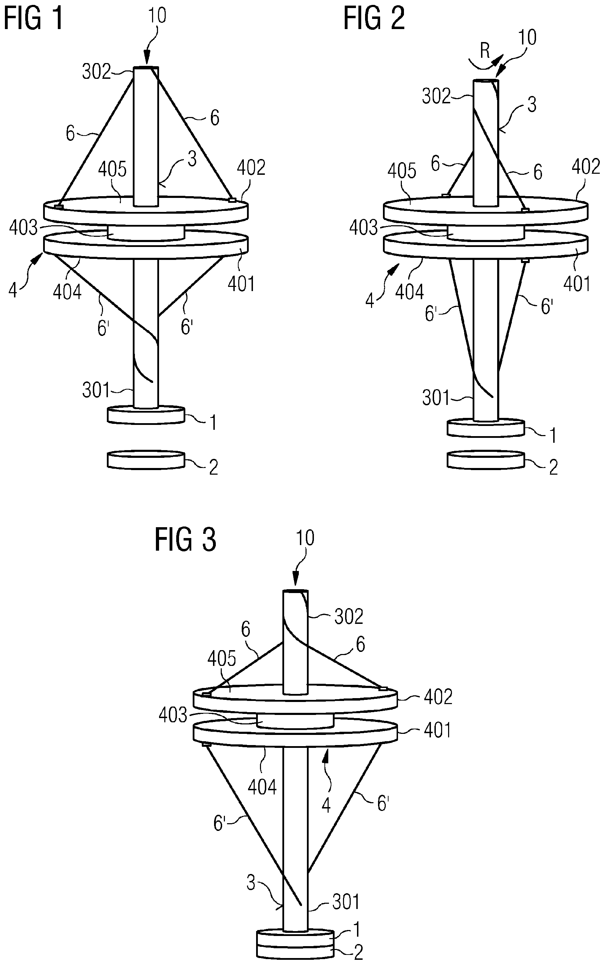

Fig. 1 bis Fig. 3 zeigen eine erste Variante eines erfindungsgemäßen Kopplungsglieds 10. Mit dem Kopplungsglied wird ein Kontaktsystem bestehend aus den scheibenförmigen Schaltkontakten 1 und 2 betätigt, wobei hierzu der Schaltkontakt 1 relativ zu dem Schaltkontakt 2 bewegt wird. Bei Kontaktierung der beiden Schaltkontakte 1 und 2 wird ein Stromkreis geschlossen und ein Stromfluss über den weiter unten erläuterten elektrisch leitenden Wickelkörper 3 und das Kontaktsystem der Schaltkontakte 1 und 2 bewirkt. Dieser Stromfluss kann durch Öffnen des Kontaktsystems über das Auseinanderbewegen der beiden Schaltkontakte 1 und 2 wieder unterbrochen werden.

Der Schaltkontakt 1 ist an einem unteren Ende 301 des Wickelkörpers 3 befestigt, der im Folgenden auch als Wickelstab bezeichnet wird. Der Wickelkörper 3 ist linear verschiebbar entlang seiner Längsachse geführt und kann nicht verdreht werden. Auf dem Wickelkörper ist ein Rotationskörper 4 drehbar gelagert, d.h. der Rotationskörper kann auf dem Wickelkörper rotieren. Der Rotationskörper umfasst zwei voneinander beabstandete Scheiben 401 und 402, zwischen denen sich ein ringförmiges Lager 403 befindet, über das die Lagerung des Rotationskörpers 4 auf dem Wickelstab 3 erfolgt. Der Wickelkörper 3 erstreckt sich über entsprechende Bohrungen in der Mitte der Scheiben 401 und 402 durch das Lager 403 hindurch.

Das Kopplungsglied der Fig. 1 zeichnet sich dadurch aus, dass eine rotatorische Bewegung des Rotationskörpers 4, welche mittels eines nicht gezeigten Antriebs (z.B. einer Feder oder eines externen Motors) erzeugt wird, in eine lineare Bewegung des Schaltkontakts 1 unter Verwendung von flexiblen Drähten 6 und 6' umgesetzt wird. Dabei sind auf der oberen Seite 405 der Scheibe 402 zwei gegenüberliegende flexible Drähte 6 vorgesehen, die um 180° versetzt zueinander an einem Ende mit dem Rand der Scheibe 402 und am anderen Ende mit dem oberen Ende 302 des Wickelstabs 3 verbunden sind. Analog sind auf der unteren Seite 404 der Scheibe 401 zwei flexible Drähte 6' vorgesehen, die wiederum um 180° zueinander versetzt sind und bei denen ein Ende am Rand der Scheibe 401 und das andere Ende an dem unteren Ende 301 des Wickelstabs 3 befestigt ist.

Durch die mit dem Antrieb bewirkte Rotationsbewegung des Rotationskörpers 4 wird ein Aufwickeln bzw. Abwickeln der Drähte 6 und 6' auf den Wickelstab 3 bewirkt, was aufgrund der linearen Führung des Wickelstabs zu dessen Bewegung in Längsrichtung und somit zum Öffnen bzw. Schließen der Schaltkontakte 1 und 2 führt. In Fig. 1 ist der Zustand gezeigt, in dem sich die beiden Schaltkontakte 1 und 2 in Unterbrechungsstellung befinden. In diesem Zustand sind die beiden Drähte 6'auf dem unteren Teil des Wickelkörpers 3 aufgewickelt, so dass die freien Längen dieser Drähte verkürzt sind und der Schaltkontakt 1 in einer oberen Position mit maximalem Abstand vom Schaltkontakt 2 angeordnet ist. Gleichzeitig sind die flexiblen Drähte 6 auf der oberen Seite 405 des Rotationskörpers 4 im abgewickelten Zustand.

Soll nunmehr von der Unterbrechungsstellung in die Kontaktstellung der beiden Schaltkontakte 1 und 2 übergegangen werden, wird über den Antrieb eine rotatorische Bewegung des Rotationskörpers in die durch den Pfeil R angedeutete Richtung (siehe Fig. 2) bewirkt. Dies hat die Folge, dass sich die Drähte 6' abwickeln, wohingegen sich die Drähte 6 aufwickeln. Dies bedingt eine Kraft auf den Wickelstab 3 nach unten, so dass sich der Kontakt 1 dem Kontakt 2 nähert, wie aus Fig. 2 ersichtlich ist. In der Darstellung der Fig. 3 ist die Rotation des Rotationskörpers nunmehr soweit fortgeschritten, dass die Kontaktstellung erreicht ist, in der ein Kontaktschluss zwischen den beiden Schaltkontakten 1 und 2 bewirkt wird.

Ausgehend von dem geschlossenen Kontakt gemäß Fig. 3 kann dieser durch eine Drehung des Rotationskörpers entgegen der angedeuteten Richtung R wieder geöffnet werden, wobei sich dann die Drähte 6' wieder auf dem Wickelkörper aufwickeln, wohingegen sich die Drähte 6 vom Wickelkörper abwickeln, was eine nach oben gerichtete Kraft bedingt. Schließlich wird wieder die Unterbrechungsstellung gemäß Fig. 1 erreicht ist. In einer bevorzugten Variante kann das Kopplungsglied über geeignete Sperrmechanismen (lösbar) sowohl in der Kontaktstellung als auch in der Unterbrechungsstellung arretiert werden.

Die in der Ausführungsform der Fig. 1 bis Fig. 3 gezeigte Anordnung der Drähte kann je nach Anforderung variiert werden. Insbesondere können auf jeder Seite des Rotationskörpers ggf. auch mehr als zwei Drähte vorgesehen sein, wenn z.B. die zu übertragende Kraft die erlaubte Zugbelastung von lediglich zwei Drähten übersteigt. Eine symmetrische Anordnung der Drähte sowohl oberhalb als auch unterhalb des Rotationskörpers, wie dies auch in der Ausführungsform der Fig. 1 bis Fig. 3 der Fall ist, ist sinnvoll, da hierdurch Kräfte sowohl in Aufwärts- als auch in Abwärtsrichtung geeignet übertragen werden können.

Nichtsdestotrotz können Drähte ggf. auch nur auf einer Seite des Rotationskörpers 4 vorgesehen sein, um nur in eine Richtung eine Kraftausübung zu ermöglichen, beispielsweise weil in die andere Richtung die Gravitationskraft zur Bewegung des Wickelstabs ausreichend ist. Geht man beispielsweise davon aus, dass die vertikale Richtung von oben nach unten in Fig. 1 bis Fig. 3 der Richtung der Gravitationskraft entspricht, so könnten ggf. nur die Drähte 6' vorgesehen sein, welche ausgehend von dem Zustand der Fig. 3 bei Drehung entgegen der Richtung R ein Öffnen des Kontakts bewirken, wohingegen ein Schließen des Kontakts rein durch die Gravitationskraft verursacht wird.

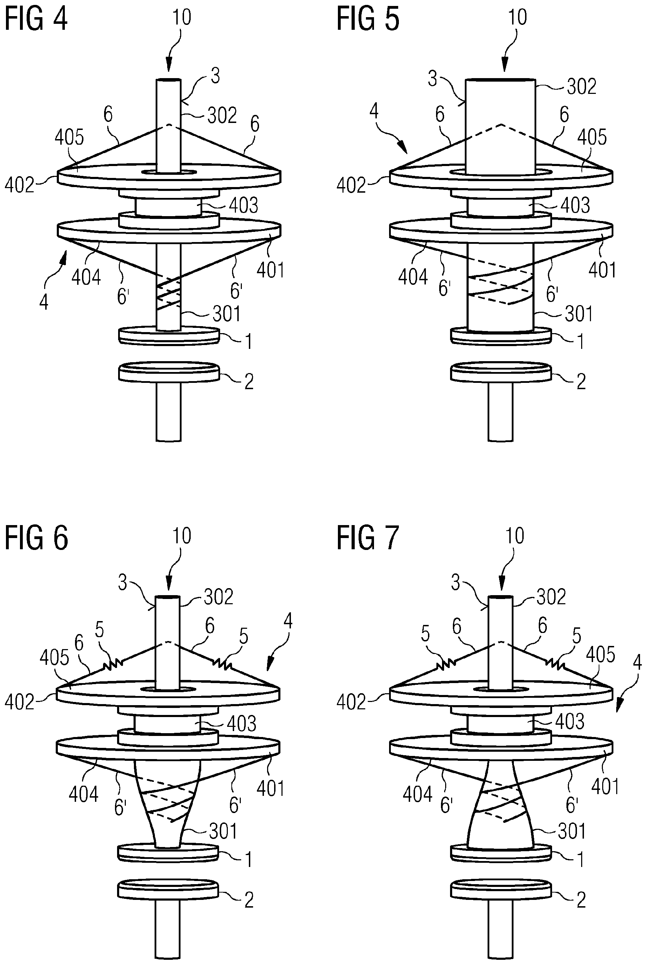

Fig. 4 bis Fig. 7 zeigen Varianten des erfindungsgemäßen Kopplungsglieds. Die gleichen bzw. einander entsprechenden Bauteile werden mit den gleichen Bezugszeichen wie in der Ausführungsform der Fig. 1 bis Fig. 3 bezeichnet. Der Aufbau und die Funktionsweise der Kopplungsglieder aus Fig. 4 bis Fig. 7 entsprechen weitestgehend dem Kopplungsglied aus Fig. 1 bis Fig. 3, so dass die Kopplungsglieder aus Fig. 4 bis Fig. 7 nicht mehr im Detail beschrieben werden, sondern lediglich die Unterschiede dieser Kopplungsglieder zum Kopplungsglied aus Fig. 1 bis Fig. 3 erläutert werden.

Das Kopplungsglied gemäß Fig. 4 entspricht im Wesentlichen dem Kopplungsglied aus Fig. 1 bis Fig. 3, wobei als Wickelkörper 3 ein relativ dünner Wickelstab verwendet wird, was wiederum zur Folge hat, dass weniger Draht pro Umdrehung des Rotationskörpers 4 abgewickelt bzw. aufgewickelt wird und hierdurch eine langsamere Bewegung des Wickelkörpers und damit ein langsameres Öffnen bzw. Schließen der Kontakte 1 und 2 bewirkt wird.

Im Unterschied zu Fig. 4 ist der Wickelkörper des Kopplungsglieds aus Fig. 5 als zylindrischer Stab mit einer wesentlich größeren Dicke ausgestaltet. Dies hat zur Folge, dass mehr Draht pro Wicklung bei Drehung des Rotationskörpers 4 auf- bzw. abgewickelt wird und hierdurch eine schnellere Relativbewegung der Kontakte 1 und 2 und damit ein schnellerer Öffnungs- bzw. Schließvorgang erreicht wird.

Fig. 6 zeigt eine Form des Wickelkörpers 3, bei der der untere Teil des Wickelkörpers auf der Seite 404 des Rotationskörpers 4 flaschenhalsförmig mit einem abnehmenden Durchmesser hin zu dem Schaltkontakt 1 ausgestaltet ist. Hierdurch wird ein degressiver Übersetzungsverlauf erreicht, d.h. je weiter die Linearbewegung des Wickelkörpers 3 nach unten fortgeschritten ist, desto langsamer wird die Bewegung. Hierdurch kann ein sanftes Aufsetzen des Schaltkontakts 1 auf den Schaltkontakt 2 erreicht werden.

Im Gegensatz zu Fig. 6 ist der untere Teil des Wickelkörpers 3 aus Fig. 7 als Flaschenhals in umgekehrter Richtung geformt, d.h. der Durchmesser des Wickelkörpers nimmt von der Seite 404 des Rotationskörpers 4 hin zu dem Schaltkontakt 1 zu. Mit dieser Variante wird ein progressiver Übersetzungsverlauf erreicht, bei dem vor dem Schließen der Schaltkontakte 1 und 2 eine deutliche Beschleunigung der Bewegung des Schaltkontakts 1 aufgrund eines schnelleren Abwickelns der Drähte 6' erreicht wird. Diese Ausführungsform kommt dann zum Einsatz, wenn ein langsames Loslaufen der Bewegung des Schaltkontakts 1 aus der Unterbrechungsstellung bevorzugt ist, aber gleichzeitig die Schließgeschwindigkeit bei nahezu geschlossenen Schaltkontakten erhöht werden soll, beispielsweise um elektrische Überschläge zu vermeiden. Diese Variante der Erfindung eignet sich sehr gut zur Verwendung bei Schaltkontakten in einer Vakuumschaltröhre.

In den Varianten der Fig. 6 und Fig. 7 sind ferner in den oberen Drähten 6 Federelemente 5 eingebracht. Gegebenenfalls können diese Federelemente zusätzlich auch in den Drähten 6' vorgesehen sein. Mittels dieser Federelemente kann die Vorspannung der Drähte präzise eingestellt werden. Etwaige Unterschiede in den Aufwickelgeschwindigkeiten der Drähten 6 und 6' auf den gegenüberliegenden Seiten des Wickelkörpers können durch die Federelemente aufgefangen werden und resultieren nur in einer leichten Veränderung der Vorspannung der Drähte. Ferner können die Federelemente so ausgelegt werden, dass sie einen relativ weiten Einfederungsweg besitzen und dadurch stabil die Vorspannung auch über eine lange Betriebszeit halten. Gegebenenfalls ist es auch möglich, anstatt von Federelementen die Drähte selbst elastisch auszugestalten.

In den Ausführungsformen der Fig. 6 und Fig. 7 ist der obere Teil des Wickelkörpers weiterhin zylindrisch ausgeführt. In abgewandelten Ausführungsformen der Fig. 6 und Fig. 7 wird der obere Teil des Wickelkörpers genauso wie der untere Teil ausgeführt. Mit anderen Worten ist in der Ausführungsform der Fig. 6 und Fig. 7 der obere Teil des Wickelkörpers (bis auf das Stück, welches beim Schließen des Kontakts in das Lager 403 eindringt) genauso wie der untere Teil flaschenhalsförmig ausgebildet, wobei die Dicke des Flaschenhalses in Fig. 6 hin zum oberen Ende 302 des Wickelkörpers zunimmt und in Fig. 7 hin zum oberen Ende 302 des Wickelkörpers abnimmt.

Hierdurch wird ein Erschlaffen der Drähte beim Aufwickeln bzw. Abwickeln vermieden. Beispielsweise wird erreicht, dass im Falle, dass der Draht auf dem oberen Teil des Wickelkörpers langsamer aufgewickelt wird, der entsprechende Draht auf dem unteren Teil des Wickelkörpers auch langsamer abgewickelt wird und somit nicht erschlafft. Umgekehrt wird mit der soeben beschriebenen Variante vermieden, dass der Draht auf dem oberen Teil des Wickelkörpers schneller aufgewickelt wird, als der entsprechende Draht auf dem unteren Teil des Wickelkörpers abgewickelt wird, was zu einer Blockierung der Kinematik führen würde.

In einer weiteren (nicht gezeigten) Variante der Erfindung sind auch kompliziertere Formen des Wickelkörpers möglich, um weitergehende Anpassungen der Übersetzungsdynamik, beispielsweise zur Anpassung auf eine ganz bestimmte elektrische Schaltkontakt- bzw. Lichtbogenphysik zu erzielen.

Die im Vorangegangenen beschriebenen Ausführungsformen der Erfindung weisen eine Reihe von Vorteilen auf. Durch die Umsetzung einer rotatorischen Bewegung in eine Linearbewegung durch Aufwickeln bzw. Abwickeln von Drähten auf einem Wickelkörper kann das gewünschte Hebelverhältnis auf einfache Weise festgelegt werden und problemlos durch die Form des Wickelkörpers in weiten Bereichen beeinflusst werden. Im Besonderen können progressive und degressive Formen des Wickelkörpers verwendet werden, um die Geschwindigkeiten in den Endlagen der Schaltkontakte zweckmäßig zu beeinflussen. In bevorzugten Varianten sind die verwendeten Drähte ferner mit Federelementen oder elastisch ausgestaltet, wodurch eine stabile und dauerhafte Vorspannung der Drähte erreicht wird und eventuelle Laufunterschiede zwischen dem oberen Teil und dem unteren Teil des Wickelkörpers ausgeglichen werden.

## Patentansprüche

1. Kopplungsglied für ein elektrisches Schaltgerät, insbesondere eine Vakuumschaltröhre, wobei das Kopplungsglied (10) einen ersten Schaltkontakt (1) zum Öffnen und Schließen eines elektrischen Kontakts mit einem zweiten Schaltkontakt (2) umfasst,
**dadurch gekennzeichnet dass**:
- das Kopplungsglied (10) einen länglichen Wickelkörper (3) mit zwei in Längsrichtung seiner Längsachse entgegengesetzten Enden (301, 302) umfasst, wobei an einem Ende der erste Schaltkontakt (1) angeordnet ist;
- das Kopplungsglied (10) einen Rotationskörper (4) umfasst, durch den sich der Wickelkörper (3) erstreckt und der zur Kopplung mit einem Antrieb vorgesehen ist, um mittels des Antriebs eine Rotationsbewegung auszuführen, wobei der Rotationskörper (4) zwei Seiten (404, 405) umfasst, von denen eine dem einen Ende (301) des Wickelkörpers (3) und die andere dem anderen Ende (302) des Wickelkörpers (3) zugewandt ist;
- der Rotationskörper (4) drehbar auf dem Wickelkörper (3) gelagert ist und der Wickelkörper (3) linear geführt ist, so dass er um seine Längsachse nicht drehbar ist, jedoch in seiner Längsrichtung relativ zu dem Rotationskörper (4) verschoben werden kann;
- auf einer oder beiden Seiten (404, 405) des Rotationskörpers jeweils eine Anzahl von Drähten (6, 6') derart zwischen dem Rotationskörper (4) und dem Wickelkörper (3) angeordnet sind, dass über entgegengesetzte Rotationsbewegungen des Rotationskörpers (4) ein Aufwickeln und Abwickeln des oder der Drähte (6, 6') auf dem Wickelkörper (3) bewirkt wird und hierdurch der Wickelkörper (3) in seiner Längsrichtung relativ zum Rotationskörper (4) zum Öffnen und Schließen des elektrischen Kontakts des ersten Schaltkontakts (1) mit dem zweiten Schaltkontakt (2) bewegt wird.

2. Kopplungsglied nach Anspruch 1, wobei der Rotationskörper (4) ein scheibenförmiger Körper ist, dessen beiden Seiten (404, 405) kreisförmig sind, wobei sich der Wickelkörper (3) vorzugsweise durch die Mitte des scheibenförmigen Körpers (4) erstreckt.

3. Kopplungsglied nach Anspruch 2, wobei der scheibenförmige Körper eine einzelne Scheibe oder mehrere Scheiben (401, 402) umfasst, die in Längsrichtung des Wickelkörpers (3) nebeneinander angeordnet sind.

4. Kopplungsglied nach einem der vorhergehenden Ansprüche, wobei für eine oder beide Seiten (404, 405) des Rotationskörpers (4) der oder die Drähte (6, 6'), die auf einer jeweiligen Seite (404, 405) angeordnet sind, jeweils mit einem Ende am Rotationskörper (4) und mit dem anderen Ende am Wickelkörper (3) befestigt sind.

5. Kopplungsglied nach einem der vorhergehenden Ansprüche, wobei für eine oder beide Seiten (404, 405) des Rotationskörpers (4) die Drähte (6, 6'), die auf einer jeweiligen Seite (404, 405) angeordnet sind, in Draufsicht auf die jeweilige Seite (404, 405) des Rotationskörpers (4) symmetrisch um den Wickelkörper (3) positioniert sind.

6. Kopplungsglied nach einem der vorhergehenden Ansprüche, wobei für eine oder beide Seiten (404, 405) des Rotationskörpers (4) die Drähte (6, 6'), die auf einer jeweiligen Seite (404, 405) angeordnet sind, ein oder mehrere Paare von Drähten (6, 6') umfassen, wobei die Drähte (6, 6') eines jeweiligen Paars in Draufsicht auf die jeweilige Seite (404, 405) des Rotationskörpers (4) um 180° um die Längsachse des Wickelkörpers (4) versetzt sind.

7. Kopplungsglied nach einem der vorhergehenden Ansprüche, wobei auf beiden Seiten (404, 405) des Rotationskörpers (4) die Drähte (6, 6') derart angeordnet sind, dass bei einer Rotationsbewegung des Rotationskörpers (4) in die eine Richtung die Drähte (6, 6') auf der einen Seite (404, 405) aufgewickelt und auf der anderen Seite (404, 405) abgewickelt werden und dass bei einer Rotationsbewegung des Rotationskörpers (4) in die andere Richtung die Drähte (6, 6') auf der einen Seite (404, 405) abgewickelt und auf der anderen Seite (404, 405) aufgewickelt werden.

8. Kopplungsglied nach einem der vorhergehenden Ansprüche, wobei der Wickelkörper (3) einen kreisförmigen Querschnitt aufweist.

9. Kopplungsglied nach Anspruch 8, wobei der Wickelkörper (3) ein zylindrischer Stab ist.

10. Kopplungsglied nach einem der vorhergehenden Ansprüche, wobei der Wickelkörper (3) auf einer oder beiden Seiten (404, 405) des Rotationskörpers (4) jeweils derart geformt ist, dass seine Dicke entlang seiner Längsrichtung variiert und insbesondere kontinuierlich zu- oder abnimmt.

11. Kopplungsglied nach Anspruch 10, wobei die Dicke des Wickelkörpers (3) auf der Seite (404) des Rotationskörpers (4), welche dem Ende (301) des Wickelkörpers mit dem daran angeordneten ersten Schaltkontakt (1) zugewandt ist, in Längsrichtung des Wickelkörpers (3) hin zu diesem Ende zunimmt und vorzugsweise die Dicke des Wickelkörpers (3) auf der anderen Seite (405) des Rotationskörpers (4) in Längsrichtung des Wickelkörpers (3) hin zu dem anderen Ende (302) des Wickelkörpers (3) abnimmt.

12. Kopplungsglied nach einem der vorhergehenden Ansprüche, wobei die Dicke des Wickelkörpers (3) auf der Seite (404) des Rotationskörpers (4), welche dem Ende (301) des Wickelkörpers mit dem daran angeordneten ersten Schaltkontakt (1) zugewandt ist, in Längsrichtung des Wickelkörpers (3) hin zu diesem Ende abnimmt und vorzugsweise die Dicke des Wickelkörpers (3) auf der anderen Seite (405) des Rotationskörpers (4) in Längsrichtung des Wickelkörpers (3) hin zu dem anderen Ende (302) des Wickelkörpers (3) zunimmt.

13. Kopplungsglied nach einem der vorhergehenden Ansprüche, wobei der erste Schaltkontakt (1) an dem einen Ende (301) des Wickelkörpers (3) direkt mit dem Wickelkörper (3) oder über ein dazwischen liegendes elastisches Element verbunden ist.

14. Kopplungsglied nach einem der vorhergehenden Ansprüche, wobei zumindest ein Teil der Drähte auf einer oder beiden Seiten (404, 405) des Rotationskörpers (4) elastische Elemente (5) enthält und/oder elastisch ausgestaltet ist.

15. Elektrisches Schaltgerät, insbesondere Vakuumschaltröhre, in dem ein elektrischer Kontakt eines ersten Schaltkontakts (1) mit einem zweiten Schaltkontakt (2) geöffnet und geschlossen werden kann, wobei das Schaltgerät ein Kopplungsglied (10) nach einem der vorhergehenden Ansprüche zum Öffnen und Schließen des elektrischen Kontakts umfasst.

## Claims

1. Coupling element for an electric switching device, specifically a vacuum switching tube, wherein the coupling element (10) has a first switching contact (1) for the opening and closing of an electrical contact with a second switching contact (2), **characterized in that**:
- the coupling element (10) has an oblong winding body (3), having two ends (301, 302) arranged in opposition in the longitudinal direction of the longitudinal axis thereof, wherein the first switching contact (1) is arranged at one end;
- the coupling element (10) comprises a rotation body (4), through which the winding body (3) extends, and is provided for coupling to a drive in order to execute a rotary movement by means of the drive, wherein the rotation body (4) comprises two sides (404, 405), of which one faces the one end (301) of the winding body (3), and the other faces the other end (302) of the winding body (3);
- the rotation body (4) is rotatably mounted on the winding body (3), and the winding body (3) is guided in a linear manner, such that the winding body (3) is not rotatable about the longitudinal axis thereof, but can be moved in the longitudinal direction thereof relative to the rotation body (4);
- on one or both sides (404, 405) of the rotation body, a plurality of wires (6, 6') in each case are arranged between the rotation body (4) and the winding body (3) such that, by means of opposing rotary movements of the rotation body (4), a winding and unwinding of the wire(s) (6, 6') is caused on the winding body (3) and, as a result, the winding body (3) is moved in the longitudinal direction thereof relative to the rotation body (4), in order to open and close the electrical contact of the first switching contact (1) with the second switching contact (2).

2. Coupling element according to Claim 1, wherein the rotation body (4) is a disk-shaped body, both sides (404, 405) of which are circular, wherein the winding body (3) preferably extends through the center of the disk-shaped body (4).

3. Coupling element according to Claim 2, wherein the disk-shaped body comprises a single disk or a plurality of disks (401, 402), which are sequentially arranged in the longitudinal direction of the winding body (3).

4. Coupling element according to one of the preceding claims, wherein, on one or both sides (404, 405) of the rotation body (4), the wire(s) (6, 6') which are arranged on a respective side (404, 405) are attached in each case at one end to the rotation body (4), and at the other end to the winding body (3).

5. Coupling element according to one of the preceding claims, wherein, on one or both sides (404, 405) of the rotation body (4), the wires (6, 6') arranged on a respective side (404, 405), in an overhead view, are symmetrically positioned around the winding body (3) on the respective side (404, 405) of the rotation body (4).

6. Coupling element according to one of the preceding claims, wherein, on one or both sides (404, 405) of the rotation body (4), the wires (6, 6') arranged on a respective side (404, 405) are configured in one or more pairs of wires (6, 6'), wherein the wires (6, 6') of a respective pair, in an overhead view of the respective side (404, 405) of the rotation body (4), are offset by an angle of 180° around the longitudinal axis of the winding body (3).

7. Coupling element according to one of the preceding claims wherein, on both sides (404, 405) of the rotation body (4), the wires (6, 6') are arranged such that, upon a rotary movement of the rotation body (4) in the one direction, the wires (6, 6') are wound onto the one side (404, 405) and unwound from the other side (404, 405) and, upon a rotary movement of the rotation body (4) in the other direction, the wires (6, 6') are unwound from one side (404, 405) and wound onto the other side (404, 405).

8. Coupling element according to one of the preceding claims, wherein the winding body (3) is of circular cross-section.

9. Coupling element according to Claim 8, wherein the winding body (3) is a cylindrical bar.

10. Coupling element according to one of the preceding claims, wherein the winding body (3), on one or both sides (404, 405) of the rotation body (4), is formed in each case such that the thickness thereof varies in the longitudinal direction thereof and, specifically, increases or decreases in a continuous manner.

11. Coupling element according to Claim 10, wherein the thickness of the winding body (3), on the side (404) of the rotation body (4) which faces the end (301) of the winding body upon which the first switching contact (1) is arranged, increases in the longitudinal direction of the winding body (3) through to said end and, preferably, the thickness of the winding body (3), on the other side (405) of the rotation body (4), decreases in the longitudinal direction of the winding body (3) through to the other end (302) of the winding body (3).

12. Coupling element according to one of the preceding claims, wherein the thickness of the winding body (3), on the side (404) of the rotation body (4) which faces the end (301) of the winding body upon which the first switching contact (1) is arranged, decreases in the longitudinal direction of the winding body (3) through to said end and, preferably, the thickness of the winding body (3), on the other side (405) of the rotation body (4), increases in the longitudinal direction of the winding body (3) through to the other end (302) of the winding body (3).

13. Coupling element according to one of the preceding claims, wherein the first switching contact (1) is directly connected to the winding body, at the one end (301) of said winding body (3), or with the interposition of an elastic element.

14. Coupling element according to one of the preceding claims, wherein at least part of the wires on one or both sides (404, 405) of the rotation body (4) incorporate elastic elements (5) and/or are of elastic design.

15. Electric switching device, specifically vacuum switching tube, in which an electrical contact of a first switching contact (1) with a second switching contact (2) can be opened and closed, wherein the switching device comprises a coupling element (10) according to one of the preceding claims for the opening and closing of the electrical contact.

## Revendications

1. Élément de couplage pour commutateur électrique, en particulier tube commutateur à vide, dans lequel l'élément de couplage (10) comprend un premier contact de commutation (1) pour ouvrir et fermer un contact électrique avec un deuxième contact de commutation (2),
**caractérisé en ce que** :
- l'élément de couplage (10) comprend un bobinoir longitudinal (3) avec deux extrémités (301, 302) opposées dans le sens longitudinal de son axe longitudinal, dans lequel le premier contact de commutation (1) est disposé à une extrémité ;
- l'élément de couplage (10) comprend un corps rotatif (4) à travers lequel le bobinoir (3) s'étend et qui est prévu pour le couplage à un entraînement, pour exercer un mouvement de rotation au moyen de l'entraînement, dans lequel le corps rotatif (4) comprend deux faces (404, 405) desquelles une est tournée vers l'une extrémité (301) du bobinoir (3) et l'autre est tournée vers l'autre extrémité (302) du bobinoir (3) :
- le corps rotatif (4) est disposé rotatif sur le bobinoir (3) et le bobinoir (3) est dirigé de manière linéaire, de sorte qu'il ne peut pas tourner sur son axe longitudinal, mais peut toutefois être déplacé dans son sens longitudinal par rapport au corps rotatif (4) ;
- sur une ou les deux face(s) (404, 405) du corps rotatif, un nombre de fils (6, 6') respectif est disposé de telle façon entre le corps rotatif (4) et le bobinoir (3) qu'un enroulement et un déroulement du ou des fil(s) (6, 6') sur le bobinoir (3) a lieu par des mouvements de rotation opposés du corps rotatif (4) et par cela, le bobinoir (3) est déplacé dans son sens longitudinal par rapport au corps rotatif (4) pour ouvrir et
fermer le contact électrique du premier contact de commutation (1) avec le deuxième contact électrique (2).

2. Élément de couplage selon la revendication 1, dans lequel le corps rotatif (4) est un corps en forme de disque dont les deux faces (404, 405) sont circulaires, dans lequel le bobinoir (3) s'étend de préférence à travers le centre du corps en forme de disque (4).

3. Élément de couplage selon la revendication 2, dans lequel le corps en forme de disque comprend un seul disque ou plusieurs disques (401, 402) qui sont disposés l'un à côté de l'autre dans le sens longitudinal du bobinoir (3).

4. Élément de couplage selon l'une des revendications précédentes, dans lequel pour une ou les deux face (s) (404, 405) du corps rotatif (4), le ou les fil (s) (6, 6') qui sont disposés sur une face (404, 405) respective, sont fixés respectivement sur le corps rotatif (4) par une extrémité et sur le bobinoir (3) par l'autre extrémité.

5. Élément de couplage selon l'une des revendications précédentes, dans lequel pour une ou les deux face (s) (404, 405) du corps rotatif (4), les fils (6, 6') qui sont disposés sur une face (404, 405) respective, sont disposés de manière symétrique autour du bobinoir (3) en vue de dessus sur la face (404, 405) respective du corps rotatif (4).

6. Élément de couplage selon l'une des revendications précédentes, dans lequel pour une ou les deux face (s) (404, 405) du corps rotatif (4), les fils (6, 6') qui sont disposés sur une face (404, 405) respective, comprennent une ou plusieurs paire(s) de fils (6, 6'), dans lequel les fils (6, 6') d'une paire respective sont décalés de 180° sur l'axe longitudinal du bobinoir (3) en vue de dessus sur la face (404, 405) respective du corps rotatif (4).

7. Élément de couplage selon l'une des revendications précédentes, dans lequel pour les deux faces (404, 405) du corps rotatif (4), les fils (6, 6') sont ainsi disposés que les fils (6, 6') sont enroulés sur l'une face (404, 405) et déroulés sur l'autre face (404, 405) lors d'une rotation du corps rotatif (4) dans l'un sens et que lors d'une rotation du corps rotatif (4) dans l'autre sens, les fils (6, 6') sont déroulés sur l'une face (404, 405) et enroulés sur l'autre face (404, 405).

8. Élément de couplage selon l'une des revendications précédentes, dans lequel le bobinoir (3) présente une section circulaire.

9. Élément de couplage selon la revendication 8, dans lequel le bobinoir (3) est une tige cylindrique.

10. Élément de couplage selon l'une des revendications précédentes, dans lequel le bobinoir (3) est ainsi formé sur une ou les deux face (s) (404, 405) du corps rotatif (4) que son épaisseur varie le long de son sens longitudinal et en particulier, augmente ou décroît de façon continue.

11. Élément de couplage selon la revendication 10, dans lequel l'épaisseur du bobinoir (3) sur la face (404) du corps rotatif (4), qui est tournée vers l'extrémité (301) du bobinoir avec le premier contact de commutation (1) disposé dessus, augmente dans le sens longitudinal du bobinoir (3) en direction de cette extrémité et de préférence, l'épaisseur du bobinoir (3) sur l'autre face (405) du corps rotatif (4) décroît dans le sens longitudinal du bobinoir (3) en direction de l'autre extrémité (302) du bobinoir (3).

12. Élément de couplage selon l'une des revendications précédentes, dans lequel l'épaisseur du bobinoir (3) sur la face (404) du corps rotatif (4), qui est tournée vers l'extrémité (301) du bobinoir avec le premier contact de commutation (1) disposé dessus, décroît dans le sens longitudinal du bobinoir (3) en direction de cette extrémité et de préférence, l'épaisseur du bobinoir (3) sur l'autre face (405) du corps rotatif (4) augmente dans le sens longitudinal du bobinoir (3) en direction de l'autre extrémité (302) du bobinoir (3).

13. Élément de couplage selon l'une des revendications précédentes, dans lequel le premier contact de commutation (1) sur l'une extrémité (301) du bobinoir (3) est relié directement au bobinoir (3) ou par un élément élastique placé entre.

14. Élément de couplage selon l'une des revendications précédentes, dans lequel au moins une partie des fils sur une ou les deux face (s) (404, 405) du corps rotatif (4) contient des éléments élastiques (5) et/ou est conçue élastique.

15. Commutateur électrique, en particulier tube commutateur à vide, dans lequel un contact électrique d'un premier contact de commutation (1) avec un deuxième contact de commutation (2) peut être ouvert et fermé, dans lequel le commutateur électrique présente un élément de couplage (10) selon l'une des revendications précédentes pour ouvrir et fermer le contact électrique.
